(19) Europäisches Patentamt / European Patent Office / Office européen des brevets

(11) **EP 4 092 923 B1**

(12) **FASCICULE DE BREVET EUROPEEN**

(45) Date de publication et mention
de la délivrance du brevet:
**23.08.2023 Bulletin 2023/34**

(21) Numéro de dépôt: **22173207.6**

(22) Date de dépôt: **13.05.2022**

(51) Classification Internationale des Brevets (IPC):
**H04B 7/0456** *(2017.01)* **H04L 5/00** *(2006.01)*
**H04L 25/03** *(2006.01)*

(52) Classification Coopérative des Brevets (CPC):
**H04B 7/0456; H04L 5/0023; H04L 5/0091;**
**H04L 25/03343**

(54) **COMPENSATION DE DERIVES FREQUENTIELLES DANS UN RESEAU MULTI-ANTENNAIRES DISTRIBUE**

KOMPENSIERUNG VON FREQUENZABWEICHUNGEN IN EINEM VERTEILTEN MEHRANTENNENNETZ

COMPENSATION FOR FREQUENCY SHIFTS IN A DISTRIBUTED MULTI-ANTENNA NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2021 FR 2105275**

(43) Date de publication de la demande:
**23.11.2022 Bulletin 2022/47**

(73) Titulaire: **Commissariat à l'énergie atomique et aux énergies alternatives
75015 Paris (FR)**

(72) Inventeur: **DEMMER, David
38054 GRENOBLE CEDEX 09 (FR)**

(74) Mandataire: **Cabinet Beaumont
4, Place Robert Schuman
B.P. 1529
38025 Grenoble Cedex 1 (FR)**

(56) Documents cités:
**US-A1- 2016 381 576     US-A1- 2017 041 058**

- SHUBHI ILMIAWAN ET AL: "Dynamic Precoder for Massive MIMO in the Presence of Large Doppler Spread", 2017 IEEE 85TH VEHICULAR TECHNOLOGY CONFERENCE (VTC SPRING), IEEE, 4 juin 2017 (2017-06-04), pages 1-5, XP033254607, DOI: 10.1109/VTCSPRING.2017.8108616

**Description**

Domaine technique

La présente description concerne de façon générale le domaine des réseaux sans fils et plus particulièrement des systèmes multi-antennaires distribués.

Technique antérieure

Les réseaux d'antennes spatialement distribuées au sein d'une ou plusieurs stations de base sont de plus en plus utilisés dans le domaine des communications sans fils. Ces réseaux multi-antennaires distribués améliorent la couverture du réseau et sont utilisés pour des communications à très hautes fréquences. Néanmoins, les performances d'un réseau multi-antennaires se dégradent lorsque le dispositif radio du signal est mobile. En effet, la mobilité du dispositif radio entraîne un décalage des fréquences des signaux reçus par effet Doppler.

De plus, d'autres décalages fréquentiels peuvent provenir d'une mauvaise synchronisation entre l'horloge du dispositif radio et les horloges des systèmes d'antennes du réseau distribué. Ce phénomène est appelé décalage de la fréquence porteuse (en anglais Carrier Frequency Offset).

Ces différents décalages des fréquences nuisent à la reconstruction du signal par recombinaison des multiples signaux reçus.

Résumé de l'invention

Il existe un besoin d'améliorer les techniques de compensation de décalages fréquentiels induits par les déplacements d'un dispositif radio ainsi que par la mauvaise synchronisation des horloges. Les modes de réalisation décrits prévoient une technique d'estimation conjointe de différentes sources de décalages fréquentiels dans le cas d'un système multi-antennaires distribué ou coopératif.

Un mode de réalisation pallie tout ou partie des inconvénients des réseaux multi-antennaires distribués connus.

Un mode de réalisation prévoit un procédé d'estimation et de correction, au niveau d'une station de base, d'une dérive fréquentielle entre des signaux émis par une pluralité de systèmes d'antennes distribués spatialement autour d'une unité de calcul de la station de base et des signaux reçus par un dispositif radio, le procédé comprenant :

a) l'envoi, par le dispositif radio, d'un premier signal, ledit signal étant reçu par chacun des systèmes d'antennes ;
b) la conversion, par les systèmes d'antennes, dudit premier signal reçu en des deuxièmes signaux en bande de base, et leur transmission, par les systèmes d'antennes à l'unité de calcul ;
c) la mesure, par l'unité de calcul, d'angles d'arrivée des deuxièmes signaux et de la dérive fréquentielle des deuxièmes signaux en bande de base ;
d) l'estimation, par l'unité de calcul, d'un angle de déplacement du dispositif radio, d'un premier décalage fréquentiel induit par le déplacement du dispositif radio et d'un deuxième décalage fréquentiel entre une horloge du dispositif radio et des horloges synchronisées des systèmes d'antennes ;
e) l'ajustement en fréquence et le précodage, par l'unité de calcul et pour chacun des systèmes d'antennes, de troisièmes signaux en bande de base ; et
f) la transmission, par l'unité de calcul, des troisièmes signaux en bande de base à la pluralité de systèmes d'antennes et la transmission, par ladite pluralité de systèmes d'antennes, desdits troisièmes signaux en bande base au dispositif radio.

Selon un mode de réalisation, l'estimation de l'angle de déplacement du dispositif radio, du premier décalage fréquentiel et du deuxième décalage fréquentiel, est effectuée par résolution d'un problème de régression décrit par l'expression suivante :

[Math 1]

$$\Delta F_i = F_{CFO} + F_{DOP}\cos(\theta_i - \theta_M), \qquad i \in \{1, \cdots, N\},$$

où N désigne le nombre de systèmes d'antennes, i désigne le rang du système d'antennes, $\Delta F_i$ désigne la dérive fréquentielle mesurée par le système d'antennes de rang i, $\theta_i$ désigne l'angle d'arrivé mesuré par le système d'antennes de rang i, $\theta_M$ désigne l'angle de déplacement du dispositif radio, $F_{CFO}$ et $F_{DOP}$ désignent respectivement le premier et le deuxième décalage fréquentiel.

Selon un mode de réalisation, le problème de régression est résolu suite à une linéarisation de l'expression décrivant ledit problème de régression, la linéarisation s'écrivant :

[Math 2]

$$\Delta F_i = F_{CFO} + F_{DOP} \cos(\theta_M) \cos(\theta_i) + F_{DOP} \sin(\theta_M) \sin(\theta_i), \qquad i \in \{1, \cdots, N\}.$$

Selon un mode de réalisation, l'angle de déplacement du dispositif radio est estimé indépendamment de la localisation du dispositif radio.

Selon un mode de réalisation, l'ajustement en fréquence des troisièmes signaux transmis au dispositif radio est effectué en adaptant la directivité et/ou la puissance et/ou la phase de chaque système d'antennes sur la base de ladite estimation.

Selon un mode de réalisation, l'adaptation des systèmes d'antennes est commandée par l'unité de calcul.

Selon un mode de réalisation, pour chacun des systèmes d'antennes, l'ajustement en fréquence des troisièmes signaux transmis comprend une compensation de l'effet de vieillissement du canal sur la base de l'estimation.

Selon un mode de réalisation, les étapes a) à f) sont répétées périodiquement.

Un mode de réalisation prévoit un système comportant une pluralité de systèmes d'antennes et une station de base tels que décrits, lesdits systèmes d'antennes étant distribués spatialement autour d'une unité de calcul de la station de base.

Selon un mode de réalisation, les systèmes d'antennes contiennent des têtes radiofréquence.

Selon un mode de réalisation, l'unité de calcul de la station de base est configurée pour mettre en oeuvre l'estimation dudit angle de déplacement, dudit premier décalage fréquentiel et dudit deuxième décalage fréquentiel.

Selon un mode de réalisation, le système comprend plusieurs stations de base communiquant entre elles, une de ces stations de base procédant à ladite estimation et transmettant des paramètres d'adaptation aux autres stations de base.

Selon un mode de réalisation, les autres stations de base sont des têtes radiofréquence.

Selon un mode de réalisation, des canaux de propagation des troisièmes signaux transmis par les systèmes d'antennes sont à trajet simple.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un exemple de système multi-antennaires distribué du type auquel s'appliquent les modes de réalisation décrits ;

la figure 2 représente un exemple de système multi-antennaire coopératif du type auquel s'appliquent les modes de réalisation décrits ;

la figure 3 est un graphique illustrant le problème lié à un décalage fréquentiel dans un système usuel ;

la figure 4 illustre de façon très schématique un exemple de transmissions de signaux entre un système d'antennes d'une station de base et un dispositif radio ;

la figure 5 représente, de façon schématique et sous forme de blocs, un exemple de système multi-antennaires distribué illustrant un mode de mise en oeuvre du procédé décrit ;

la figure 6 est un organigramme représentant des étapes d'un mode de mise en oeuvre du procédé décrit ; et

la figure 7 est un graphique illustrant des exemples de débit en fonction du vieillissement du canal dans les modes de réalisation décrits.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le fonctionnement interne des systèmes d'antennes et le type de modulation des signaux ne sont pas détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

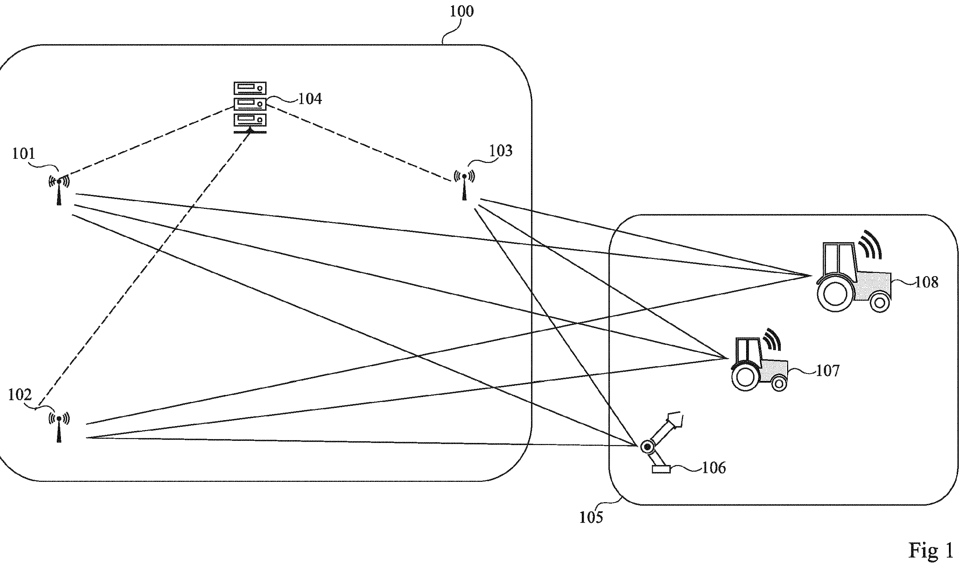

La figure 1 représente un exemple de système multi-antennaires distribué du type auquel s'appliquent les modes de réalisation décrits.

Le système représenté en figure 1 correspond à un réseau multi-antennaires distribué mis en oeuvre par une station de base 100. La station de base 100 comprend, dans cet exemple arbitraire, trois systèmes d'antennes 101, 102 et 103 distribués spatialement autour d'une unité de calcul 104. Les systèmes d'antennes 101, 102 et 103 forment un réseau multi-antennaires distribué (de l'anglais distributed Multiple-Input-Multiple-Output). Les systèmes d'antennes 101, 102 et 103 sont chacun munis de plusieurs antennes d'émission/réception et sont capables de techniques de formation de faisceaux. Ils sont responsables du traitement radiofréquence des signaux comme l'amplification, le filtrage et la transposition autour de la fréquence porteuse pour les signaux émis et en bande de base pour les signaux reçus. Les liens (pointillés) entre les systèmes d'antennes 101, 102 et 103 et l'unité de calcul 104 de la station de base 100 sont généralement filaires, par exemple en fibre optique, et servent à échanger les signaux en bande de base et des signaux de configuration pour les systèmes d'antennes 101, 102 et 103 comme par exemple l'adaptation de la formation des faisceaux. La station de base 100 assure une connexion sans fil (trait continu) entre des dispositifs radio 106, 107 et 108 (dans cet exemple, arbitrairement trois dispositifs radio) formant un groupe de dispositifs radio 105 et les systèmes d'antennes 101, 102 et 103. Les dispositifs radio 106, 107 et 108 sont par exemple des téléphones mobiles ou des dispositifs connectés de technologie quatrième génération (4G) et/ou cinquième génération (5G) se connectant sur des réseaux de communication sans fil. L'unité de calcul 104 gère les systèmes d'antennes 101, 102 et 103 et leur transmet un ou plusieurs signaux à transmettre (faire suivre) aux dispositifs radio 106, 107 et 108.

A titre d'exemple, un des dispositifs radio 106, 107 ou 108 du groupe de dispositifs 105 reçoit simultanément, par l'intermédiaire des systèmes d'antennes 101, 102 et 103, plusieurs signaux cohérents et les recombine afin de reconstruire un signal. On parle d'émission conjointe de la part des systèmes d'antennes 101, 102 et 103. De la même manière, les systèmes d'antennes 101, 102 et 103 de la station de base 100 reçoivent un même signal provenant d'un des dispositifs radio 106, 107 ou 108 du groupe de dispositifs 105. On parle alors de réception conjointe.

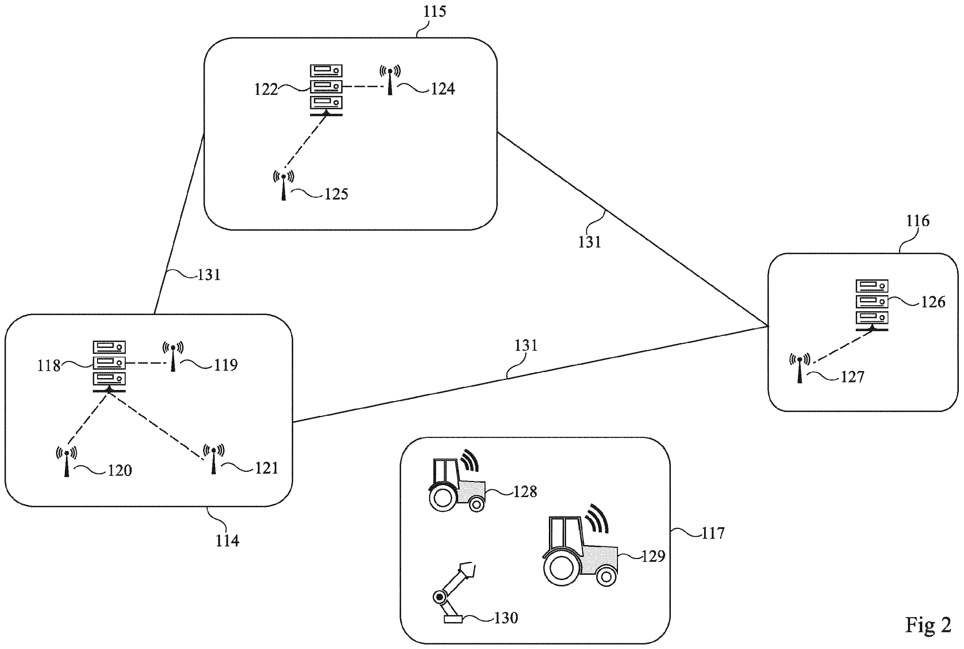

La figure 2 représente un exemple de système multi-antennaire coopératif du type auquel s'appliquent les modes de réalisation décrits.

Le système représenté en figure 2 correspond à un réseau comprenant, dans l'exemple représenté, trois stations de base 114, 115 et 116. La station de base 114 comprend une unité de calcul 118 et, dans cet exemple arbitraire, trois systèmes d'antennes 119, 120 et 121. La station de base 115 comprend une unité de calcul 122 et, par exemple, deux systèmes d'antennes 124 et 125. La station de base 116 comprend une unité de calcul 126 et, par exemple, un unique système d'antennes 127. Des liens 131 entre les stations de base 114, 115 et 116 sont généralement filaires, par exemple en fibre optique. Une des stations de base 114, 115 ou 116 est dite station de base centrale et gère les transmissions sans fil de signaux (non représentés) vers un groupe de dispositifs radio 117 de trois dispositifs radio 128, 129 et 130. L'ensemble des trois stations de base 114, 115 et 116 forme alors un réseau coopératif CO-MIMO (de l'anglais Cooperative Multiple-Input-Multiple-Output).

Les signaux émis par les systèmes d'antennes des réseaux illustrés par les figures 1 et 2 sont émis sur des canaux ou liens dominés par un seul trajet (trajet simple) car la puissance d'émission est concentrée sur le trajet direct grâce à des techniques de formation de faisceaux opérées par les systèmes d'antennes de la station de base.

Les signaux reçus par les systèmes d'antennes illustrés par les figures 1 et 2 (le lien montant n'est pas représenté sur la figure 2) sont dominés par un seul trajet car les trajets secondaires sont spatialement filtrés grâce à des techniques de formation de faisceaux opérées par les systèmes d'antennes de la station de base.

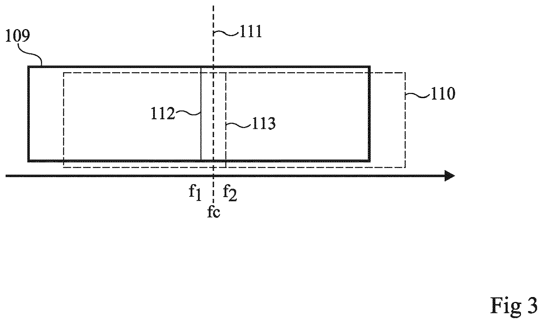

La figure 3 est un graphique illustrant le problème lié à un décalage fréquentiel dans un système usuel.

Un déplacement du dispositif radio, qu'il s'agisse d'un des dispositifs 106, 107 ou 108 du groupe de dispositifs 105 de la figure 1 ou d'un des dispositifs 128, 129 ou 130 du groupe de dispositifs 117 de la figure 2, engendre un décalage (offset) entre les fréquences des signaux émis et les fréquences des signaux reçus. Ce phénomène est connu sous le nom d'effet Doppler et a lieu dès lors que la distance entre un émetteur d'un signal et un dispositif radio du même signal varie au cours du temps.

Par ailleurs, les horloges des systèmes d'antennes ne sont généralement pas synchronisées avec l'horloge du dispositif radio. Cela entraine un autre décalage fréquentiel entre les signaux reçus et les signaux émis.

Dans l'exemple illustré par la figure 2, on suppose que les systèmes d'antennes 124 et 125 émettent dans une plage de fréquences (non représentée) centrée sur une valeur $f_C$ (pointillé, 111). Le dispositif radio 128 est par exemple mobile et sa distance aux systèmes d'antennes 124 et 125 varie. Par exemple, la distance entre le dispositif radio 128 et le système d'antennes 124 diminue avec le déplacement du dispositif radio 128 et la distance entre le dispositif radio 128 et le système d'antennes 125 augmente avec le déplacement du dispositif radio 128.

En figure 3, on illustre par un bloc 109 la bande passante dans laquelle le signal émis par le système d'antennes 124 est reçu par le dispositif radio 128. La bande passante illustrée par le bloc 109 est centrée sur une fréquence $f_1$ (trait continu, 112) inférieure à la valeur $f_C$. On illustre par un bloc 110 la bande passante dans laquelle le signal émis par le système d'antennes 125 est reçu par le dispositif radio 128. La bande passante illustrée par le bloc 110 est centrée sur une fréquence $f_2$ (trait pointillé, 113) supérieure à la valeur $f_C$. Les différents signaux à recombiner sont donc reçus avec des décalages fréquentiels ce qui nuit à la bonne reconstruction du signal.

Ce décalage dû à l'effet Doppler et à la mauvaise synchronisation des horloges, détériore la qualité du signal et, s'il est trop important, peut même en empêcher la reconstruction.

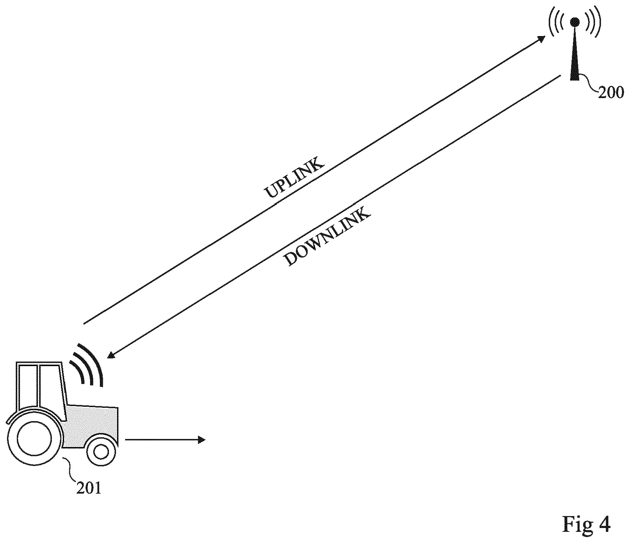

La figure 4 illustre de façon très schématique un exemple de transmissions de signaux entre un système d'antennes d'une station de base et un dispositif radio.

Dans l'exemple de la figure 4, un dispositif radio 201 envoie, à un système d'antennes 200 et par l'intermédiaire d'un lien ou d'un canal montant (UPLINK), un signal de fréquence identique à la fréquence du signal préalablement reçu par le dispositif radio 201. Cependant, le déplacement du dispositif radio et la mauvaise synchronisation des horloges entraînent un décalage entre la fréquence du signal montant et la fréquence attendue. Sur le lien montant, le décalage entre la fréquence du signal transmis et celle du signal reçu s'écrit :

[Math 3]

$$\Delta F_{UL} = F_{CFO} + F_{DOP},$$

où $\Delta F_{UL}$ représente la différence entre la fréquence du signal montant et la fréquence $f_C$ (fig 3, 111), $F_{CFO}$ (de l'anglais Carrier Frequency Offset) représente la valeur du décalage dû à la mauvaise synchronisation des horloges et $F_{DOP}$ représente la valeur du décalage dû à l'effet Doppler, autrement dit, dû au déplacement du dispositif radio 201. La dérive de fréquence $\Delta F_{UL}$ correspond au décalage de fréquence résiduel une fois le signal reçu remis en bande de base reçu par l'unité de calcul de la station de base (non illustrée en figure 4) contenant le système d'antennes 200.

La transmission du signal montant (UPLINK) permet à ladite station de base de mesurer un angle d'arrivée du signal montant ainsi que la dérive de fréquence résiduelle après la remise en bande de base du signal reçu. Les techniques de mesure des angles d'arrivée et des dérives fréquentielles au niveau des récepteurs de la station de base ne sont pas détaillées ici et sont connues par la personne du métier. A titre d'exemple, les mesures d'angle sont effectuées par projection sur des sous-espaces angulaires grâce à de la formation de faisceaux et les dérives fréquentielles sur les signaux en bande de base sont mesurées par l'intermédiaire des variations des phases desdits signaux.

Le système d'antennes 200 envoie ensuite un signal descendant au dispositif radio 201 sur un canal ou lien descendant (DOWNLINK). Sur le lien descendant, le décalage entre la fréquence du signal transmis et du signal reçu s'écrit :

[Math 4]

$$\Delta F_{DL} = -F_{CFO} + F_{DOP},$$

où $\Delta F_{DL}$ représente la différence entre la fréquence du signal descendant et la fréquence du signal reçu par le dispositif radio.

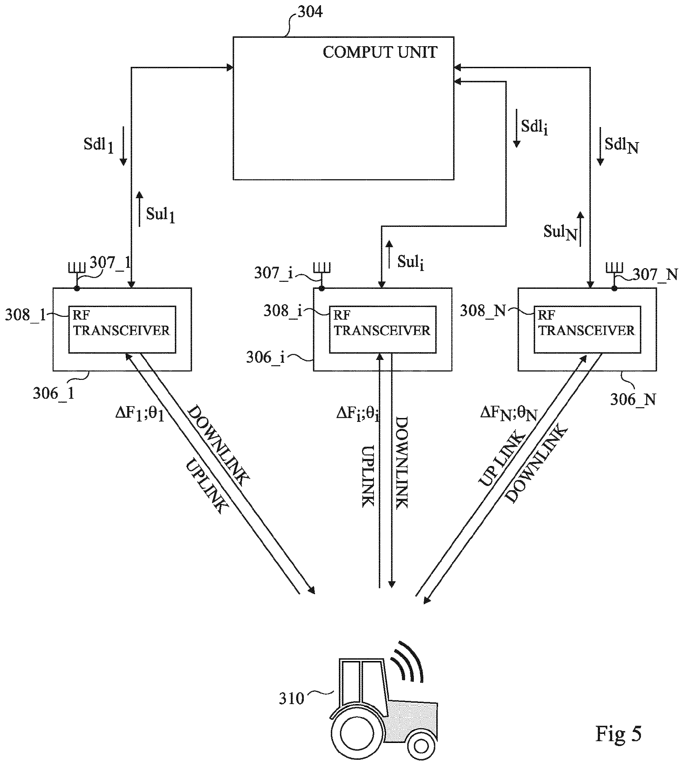

La figure 5 représente, de façon schématique et sous forme de blocs, un exemple de système multi-antennaires distribué illustrant un mode de mise en oeuvre du procédé décrit.

Le système représenté en figure 5 correspond à un réseau distribué constitué d'une station de base comprenant une unité de calcul 304 (COMPUT UNIT) et un nombre N de systèmes d'antennes 306 (306_1, ..., 306_i, ..., 306_N), N étant un nombre entier supérieur ou égal à 3. Chaque système d'antennes 306 comprend au moins une antenne 307 (307_1, ..., 307_i, ..., 307_N) et une tête radiofréquence 308 (308_1, ..., 308_i, ..., 308_N) (RF TR_ANSCEIVER) configurée pour moduler en fréquence puis émettre des signaux descendants vers un dispositif radio 310 et recevoir des signaux montants émis par le dispositif radio 310 puis les remettre en bande de base. Les canaux ou liens de propagation des signaux émis par le réseau distribué illustré par la figure 5 sont dominés par un seul trajet.

Selon un mode de réalisation, lorsque le réseau est de type coopératif, il comporte plusieurs stations de base, chacune composée d'une unité de calcul et d'au moins un système d'antennes. Le lien entre les stations de base est généralement filaire, par exemple en fibre optique.

Lors d'une connexion du dispositif radio 310 au réseau distribué (non coopératif), l'unité de calcul 304 transmet un signal à chacun des systèmes d'antennes 306. Le signal transmis par l'unité de calcul est, selon le type d'implémentation du réseau, différent ou non selon les systèmes d'antennes 306.

Lorsque l'unité de calcul 304 transmet un signal à un système d'antennes 306, ce signal est traité par la tête radiofréquence 308 du système d'antennes 306 puis est transmis au dispositif radio 310 par l'intermédiaire des antennes 307 du système d'antennes 306.

Les transmissions entre chaque système d'antennes 306 et le dispositif radio 310 s'effectuent sur des liaisons montantes UPLINK (dispositif radio vers systèmes d'antennes) et descendantes DOWNLINK (systèmes d'antennes vers dispositif radio).

Dans les applications visées par la présente description, une fois les N signaux descendants reçus par le dispositif radio 310, celui-ci retourne, sur les liens montants UPLINK, un signal montant, modulé en fréquence et avec présence de décalages fréquentiels, à chaque système d'antennes 306. Chaque tête radiofréquence 308 transmet alors un signal montant Sul (Sul$_1$, ..., Sul$_i$, ..., Sul$_N$) et remis en bande de base, avec présence de décalages fréquentiels, à l'unité de calcul 304 qui mesure alors respectivement une dérive (ou décalage) en fréquence ($\Delta F_1$, ..., $\Delta F_i$, ..., $\Delta F_N$) entre le signal transmis et le signal reçu ainsi qu'un angle d'arrivée ($\theta_1$, ..., $\theta_i$, ..., $\theta_N$) pour chacun des N signaux montants reçus.

Dans le cas d'un réseau coopératif, chaque unité de calcul de chaque station de base va alors mesurer les dérives de fréquence et les angles d'arrivée des signaux reçus par ses systèmes d'antennes. Les mesures collectées sont ensuite partagées vers l'ensemble des stations de base coopératives entretenant un lien vers le même dispositif radio.

L'unité de calcul 304 estime alors les décalages $F_{CFO}$ et $F_{DOP}$ (figure 2) ainsi qu'un angle de déplacement $\theta_M$ du dispositif radio par une résolution d'un problème de régression défini par l'expression :

[Math 5]

$$\Delta F_i = F_{CFO} + F_{DOP}\, cos(\theta_i - \theta_M), \qquad i \in \{1, \cdots, N\}.$$

Cette expression décrit la dérive ou le décalage en fréquence dans un réseau distribué dans lequel le dispositif radio est mobile et dans lequel l'horloge du dispositif radio n'est pas synchronisée avec les horloges des différentes têtes radiofréquence.

Les quantités $F_{CFO}$ et $F_{DOP}$ ne dépendent pas du rang i du système d'antennes 306 considéré. On suppose pour cela que les horloges des systèmes d'antennes 306 sont toutes synchronisées, par exemple par un protocole de synchronisation de type TSN (de l'anglais Time-Sensitive Network).

Une fois l'estimation des décalages $F_{CFO}$, $F_{DOP}$ et de l'angle $\theta_M$, ne dépendant pas des rangs des systèmes d'antennes, effectuée par l'unité de calcul 304, celle-ci ajuste en fréquence les signaux à transmettre par chaque système d'antennes 306 au dispositif radio 310. De nouveaux signaux descendants Sdl (Sdl$_1$, ..., Sdl$_i$, ..., Sdl$_N$) remis en bande de base avec compensation des décalages fréquentiels sont alors transmis par l'unité de calcul 304 à chaque système d'antennes 306. Chaque système d'antennes 306 transmet alors, par l'intermédiaire des liens descendants (DOWNLINK), un signal descendant modulé en fréquence avec compensation des décalages fréquentiels.

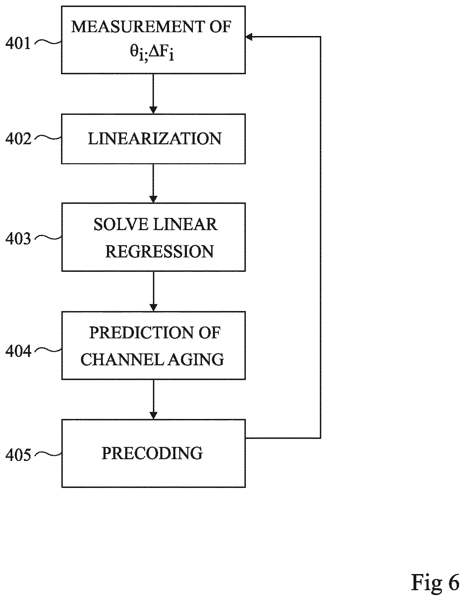

La figure 6 est un organigramme représentant des étapes d'un mode de mise en oeuvre du procédé décrit.

Dans une étape 401 (MEASUREMENT OF $\theta_i$ ; $\Delta F_i$), l'unité de calcul 304 du réseau distribué illustré par la figure 5 mesure les angles d'arrivée des signaux montants ainsi que la dérive ou le décalage de fréquence $\Delta Fi$ à partir des signaux montants transmis par le dispositif radio 310 et reçus par les systèmes d'antennes 306.

Afin de pouvoir estimer les décalages $F_{CFO}$ et $F_{DOP}$ ainsi que l'angle de déplacement du dispositif radio 310 dans le but d'ajuster les signaux émis, l'expression :

[Math 6]

$$\Delta F_i = F_{CFO} + F_{DOP}\, cos(\theta_i - \theta_M), \qquad i \in \{1, \cdots, N\},$$

est linéarisée dans une étape 402 (LINEARIZATION) postérieure à l'étape 401 et par l'unité de calcul 304, en une expression linéaire :

[Math 7]

$$\Delta F_i = F_{CFO} + F_{DOP}\, cos(\theta_M)\, cos(\theta_i) + F_{DOP}\, sin(\theta_M)\, sin(\theta_i), \qquad i \in \{1, \cdots, N\}.$$

Cette linéarisation s'écrit sous la forme matricielle :

[Math 8]

$$A = XB$$

où

- A est un vecteur de taille N composé des dérives de fréquences mesurées par l'unité de calcul 304. Autrement dit,

[Math 9]

$$A = (\Delta F_1, \cdots, \Delta F_N),$$

- B est une matrice de taille 3*N s'écrivant :

[Math 10]

$$B = \begin{pmatrix} 1 & \cdots & 1 \\ cos(\theta_1) & \ddots & cos(\theta_N) \\ sin(\theta_1) & \cdots & sin(\theta_N) \end{pmatrix},$$

- X est un vecteur de taille 3 s'écrivant :

[Math 11]

$$X = (F_{CFO}, F_{DOP}\, cos(\theta_M), F_{DOP}\, sin(\theta_M)).$$

Les objets mathématiques A et B sont uniquement composés des valeurs connues, mesurées par l'unité de calcul 304 et les coordonnées du vecteur X sont uniquement fonction des paramètres à estimer.

Dans une étape 403 (SOLVE LINEAR REGRESSION), postérieure à l'étape 402, le problème de régression linéaire décrit par l'expression linéaire obtenue à l'étape 402 est résolu par l'unité de calcul 304. Une estimation $X_{estim}$ du vecteur X est alors donnée par l'expression :

[Math 12]

$$X_{estim} = AB^T(BB^T)^{-1},$$

où la matrice $B^T$ désigne la matrice transposée de la matrice B et la matrice $(BB^T)^{-1}$ désigne la matrice inverse du produit matriciel $BB^T$. Des valeurs estimées $F2_{CFO}$, $F2_{DOP}$ et $\theta2_M$ des décalages $F_{CFO}$, $F_{DOP}$ ainsi que de l'angle $\theta_M$ sont alors données par les expressions :

[Math 13]

$$F2_{CFO} = X_{estim}(1),$$

$$F2_{DOP} = \sqrt{X_{estim}(2)^2 + X_{estim}(3)^2},$$

$$\theta2_M = arctan\big(X_{estim}(3)/X_{estim}(2)\big),$$

où $X_{estim}(1)$, $X_{estim}(2)$ et $X_{estim}(3)$ désignent respectivement la première, la deuxième et la troisième coordonnée du vecteur $X_{estim}$.

Dans une étape 404 (PREDICTION OF CHANNEL AGING), postérieure à l'étape 403, un vieillissement des canaux de propagation descendants $H_i$, dû à un délai $\Delta t$ après l'estimation du canal descendant à un instant $t_0$, est évalué à partir des estimations obtenues dans l'étape 403 et selon l'expression :

[Math 14]

$$H_i(t_0 + \Delta t) = H_i(t_0)\, exp(j2\pi(-F2_{CFO} + F2_{DOP}\, cos(\theta_i - \theta2_M))\Delta t)$$

où $H_i(t_0)$ est l'état du canal à l'instant de l'estimation du canal $t_0$ et j est le nombre complexe tel que son carré soit égal à -1. Les techniques d'estimation de canal sont connues par la personne du métier et ne sont pas décrites plus avant.

Dans une étape 405 (PRECODING), postérieure à l'étape 404, les signaux descendants sont ajustés et conjointement précodés en tenant compte des estimations obtenues aux étapes 403 et 404. L'ajustement des signaux est par exemple mis en oeuvre par la méthode dite « zéro-forcing » bien que d'autres méthodes d'ajustement soient possibles.

Suite à l'étape 405, le procédé reprend, pour chaque signal montant reçu ou de manière périodique, à l'étape 401 après un délai de par exemple plusieurs millisecondes. Par exemple la période varie entre 1 et 20 millisecondes.

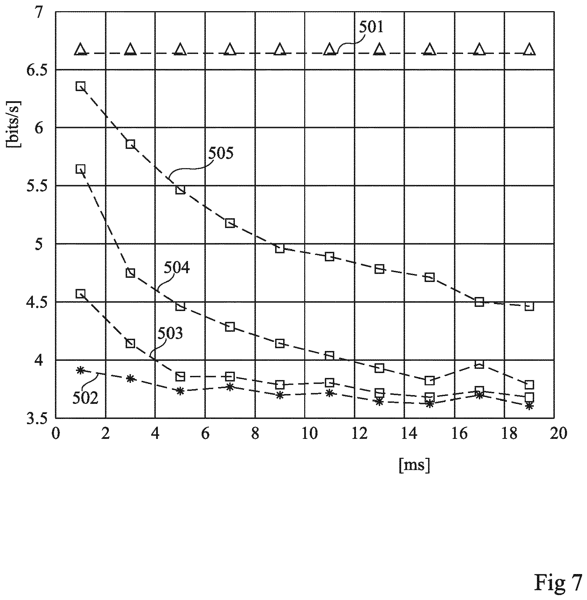

La figure 7 est un graphique illustrant des exemples de débit en fonction du vieillissement du canal dans les modes de réalisation décrits.

Le graphique de la figure 7 comprend cinq courbes décrivant des évolutions du débit d'un signal en bits par seconde en fonction du délai après la dernière estimation du canal en millisecondes dans un réseau distribué semblable à celui illustré en figure 5 et comportant quatre systèmes d'antennes et auquel quatre dispositifs radio sont connectés. Le vieillissement du canal désigne la variation de phase induite par le temps s'étant écoulé depuis la dernière exécution du procédé illustré par la figure 6, en particulier depuis le dernier ajustement des signaux émis.

Une courbe 501 représente l'évolution du débit d'un signal dans un réseau distribué idéal, c'est-à-dire un réseau distribué dans lequel les horloges des dispositifs radio sont synchronisées avec les horloges des systèmes d'antennes et dans lequel les dispositifs radio sont immobiles. Dans ce cas, il n'y a pas de décalage entre les fréquences des signaux émis et les fréquences des signaux reçus. Cette situation idéale permet d'obtenir, dans cet exemple, un débit constant d'entre 6 et 7 bits par seconde. Toutefois, cette situation idéale n'est pas représentative de la réalité.

Une courbe 502 représente l'évolution du débit d'un signal dans un réseau distribué, dans lequel il existe un décalage entre les fréquences des signaux émis et les fréquences des signaux reçus et dans lequel aucun ajustement n'est effectué. La courbe 502 présente un mauvais débit, et ce, dès les premiers signaux transmis par les systèmes d'antennes aux dispositifs radio. La courbe 502 décroît légèrement sur les trois premières transmissions puis reste, dans cet exemple, relativement stable sur une valeur très faible de débit d'entre 3,5 et 4 bits par seconde.

Une courbe 503 représente l'évolution du débit d'un signal dans un réseau distribué, dans lequel il existe un décalage entre les fréquences des signaux émis et les fréquences des signaux reçus et dans lequel une estimation des décalages est effectuée selon le procédé présenté en relation avec la figure 6. Dans ce réseau distribué, les faisceaux des systèmes d'antennes sont larges, c'est-à-dire que la résolution angulaire des systèmes d'antennes est faible. La courbe 503 montre, dans cet exemple, que la qualité des premiers signaux suite à l'ajustement sur la base de l'estimation est meilleure que sans ajustement. La qualité des signaux se dégrade ensuite rapidement en attendant une nouvelle itération du procédé de compensation présenté par la figure 4.

Des courbes 504 et 505 représentent l'évolution du débit d'un signal dans un réseau distribué mettant en oeuvre une estimation des décalages selon le procédé présenté en figure 4. Pour ces réseaux, les faisceaux des systèmes d'antennes sont plus étroits et la résolution angulaire est donc meilleure. Suite à l'estimation et l'ajustement des signaux, la qualité du signal de ces deux réseaux est proche de la courbe idéale 501 (environ 5,5 bits par seconde pour le réseau représenté par la courbe 504 et environ 6,5 pour le réseau représenté par la courbe 505). La qualité du signal représenté par la courbe 504 se dégrade et, après une quinzaine de millisecondes, devient proche de la qualité du signal représenté par la courbe 502. Dans cet exemple, la courbe 505 décroît moins rapidement que les courbes 503 et 504, en effet, 20 millisecondes après l'ajustement, le débit présenté par la courbe 505 est à 4,5 bits par seconde. Les différences de performance observées sont induites par l'étroitesse des faisceaux utilisés par les systèmes d'antennes. Plus les faisceaux sont étroits, plus fiable est la mesure de l'angle d'arrivée $\theta_i$ et donc meilleure est l'estimation conjointe des dérives de fréquences.

Un avantage des modes de réalisation décrits est que la connaissance de la localisation des dispositifs radio n'est pas nécessaire à l'estimation de leurs angles de déplacement.

Un autre avantage des modes de réalisation décrits est qu'il n'est pas non plus nécessaire d'avoir des canaux de propagation à trajets multiples.

Un autre avantage des modes de réalisation décrits est qu'ils s'appliquent à des réseaux distribués, tels que des réseaux de type MIMO distribués, ainsi qu'à des réseaux coopératifs comprenant un réseau de stations de bases coopératives.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, différents types de réseaux distribués permettent la mise en oeuvre des modes de réalisation décrits.

## Revendications

**1.** Procédé d'estimation et de correction, au niveau d'une station de base (100, 114, 115, 116), d'une dérive fréquentielle ($\Delta F_1$, $\Delta F_i$, $\Delta F_N$) entre des signaux émis par une pluralité de systèmes d'antennes (101, 102, 103, 119, 120, 121, 124, 125, 126, 127, 200, 306_1, 306_i, 306_N) distribués spatialement autour d'une unité de calcul (104, 118, 122, 126, 304) de la station de base et des signaux reçus par un dispositif radio (106, 107, 108, 128, 129, 130, 201, 310), le procédé comprenant :

    a) l'envoi, par le dispositif radio, d'un premier signal (UPLINK), ledit signal étant reçu par chacun des systèmes d'antennes ;
    b) la conversion, par les systèmes d'antennes, dudit premier signal reçu en des deuxièmes signaux en bande de base, et leur transmission, par les systèmes d'antennes à l'unité de calcul ;
    c) la mesure, par l'unité de calcul, d'angles d'arrivée ($\theta_1$, $\theta_i$, $\theta_N$) des deuxièmes signaux et de la dérive fréquentielle des deuxièmes signaux en bande de base ;
    d) l'estimation, par l'unité de calcul, d'un angle de déplacement ($\theta_M$) du dispositif radio, d'un premier décalage fréquentiel ($F_{DOP}$) induit par le déplacement du dispositif radio et d'un deuxième décalage fréquentiel ($F_{CFO}$) entre une horloge du dispositif radio et des horloges synchronisées des systèmes d'antennes ;
    e) l'ajustement en fréquence et le précodage en tenant compte des estimations obtenues, par l'unité de calcul et pour chacun des systèmes d'antennes, de troisièmes signaux en bande de base ; et
    f) la transmission, par l'unité de calcul, des troisièmes signaux en bande de base à la pluralité de systèmes d'antennes et la transmission, par ladite pluralité de systèmes d'antennes, desdits troisièmes signaux en bande base au dispositif radio.

**2.** Procédé selon la revendication 1, dans lequel l'estimation de l'angle de déplacement ($\theta_M$) du dispositif radio (106, 107, 108, 128, 129, 130, 201, 310), du premier décalage fréquentiel ($F_{DOP}$) et du deuxième décalage fréquentiel ($F_{CFO}$), est effectuée par résolution d'un problème de régression décrit par l'expression suivante :

[Math 15]

$$\Delta F_i = F_{CFO} + F_{DOP} \cos(\theta_i - \theta_M), \qquad i \in \{1, \cdots, N\},$$

où N désigne le nombre de systèmes d'antennes (101, 102, 103, 119, 120, 121, 124, 125, 126, 127, 200, 306_1, 306_i, 306_N), i désigne le rang du système d'antennes , $\Delta F_i$ désigne la dérive fréquentielle mesurée par le système d'antennes de rang i, $\theta_i$ désigne l'angle d'arrivé mesuré par le système d'antennes de rang i, $\theta_M$ désigne l'angle de déplacement du dispositif radio, $F_{CFO}$ et $F_{DOP}$ désignent respectivement le premier et le deuxième décalage fréquentiel.

**3.** Procédé selon la revendication 2, dans lequel le problème de régression est résolu suite à une linéarisation de l'expression décrivant ledit problème de régression, la linéarisation s'écrivant :

[Math 16]

$$\Delta F_i = F_{CFO} + F_{DOP} \cos(\theta_M) \cos(\theta_i) + F_{DOP} \sin(\theta_M) \sin(\theta_i), \qquad i \in \{1, \cdots, N\}.$$

**4.** Procédé selon l'une quelconque des revendications 1 à 3, dans lequel l'angle de déplacement du dispositif radio

($\theta_M$) est estimé indépendamment de la localisation du dispositif radio (106, 107, 108, 128, 129, 130, 201, 310).

5. Procédé selon l'une quelconque des revendications 1 à 4, dans lequel l'ajustement en fréquence des troisièmes signaux transmis au dispositif radio (106, 107, 108, 128, 129, 130, 201, 310) est effectué en adaptant la directivité et/ou la puissance et/ou la phase de chaque système d'antennes (101, 102, 103, 119, 120, 121, 124, 125, 126, 127, 200, 306_1, 306_i, 306_N) sur la base de ladite estimation.

6. Procédé selon la revendication 5, dans lequel l'adaptation des systèmes d'antennes (101, 102, 103, 119, 120, 121, 124, 125, 126, 127, 200, 306_1, 306_i, 306_N) est commandée par l'unité de calcul (104, 118, 122, 126, 304).

7. Procédé selon l'une quelconque des revendications 1 à 6, dans lequel, pour chacun des systèmes d'antennes (101, 102, 103, 119, 120, 121, 124, 125, 126, 127, 200, 306_1, 306_i, 306_N), l'ajustement en fréquence des troisièmes signaux transmis comprend une compensation de l'effet de vieillissement du canal sur la base de l'estimation.

8. Procédé selon l'une quelconque des revendications 1 à 7, dans lequel les étapes a) à f) sont répétées périodiquement.

9. Système comportant une pluralité de systèmes d'antennes (101, 102, 103, 119, 120, 121, 124, 125, 126, 127, 200, 306_1, 306_i, 306_N) et une station de base (100, 114, 115, 116) configurés pour la mise en oeuvre du procédé selon l'une quelconque des revendication 1 à 8, lesdits systèmes d'antennes étant distribués spatialement autour d'une unité de calcul (104, 118, 122, 126, 304) de la station de base.

10. Système selon la revendication 9, dans lequel les systèmes d'antennes (101, 102, 103, 119, 120, 121, 124, 125, 126, 127, 200, 306_1, 306_i, 306_N) contiennent des têtes radiofréquence (308_1, 308_i, 308_N).

11. Système selon la revendication 9 ou 10, dans lequel l'unité de calcul (104, 118, 122, 126, 304) de la station de base (100, 114, 115, 116) est configurée pour mettre en oeuvre l'estimation dudit angle de déplacement ($\theta_M$), dudit premier décalage fréquentiel ($F_{DOP}$) et dudit deuxième décalage fréquentiel ($F_{CFO}$).

12. Système selon l'une quelconque des revendications 9 à 11, comprenant plusieurs stations de base (100, 114, 115, 116) communiquant entre elles, une de ces stations de base procédant à ladite estimation et transmettant des paramètres d'adaptation aux autres stations de base.

13. Système selon la revendication 12, dans lequel les autres stations de base (100, 114, 115, 116) sont des têtes radiofréquence (308_1, 308_i, 308_N).

14. Système selon l'une quelconque des revendications 9 à 13, dans lequel des canaux de propagation des troisièmes signaux transmis par les systèmes d'antennes (101, 102, 103, 119, 120, 121, 124, 125, 126, 127, 200, 306_1, 306_i, 306_N) sont à trajet simple.

**Patentansprüche**

1. Verfahren zur Schätzung und Korrektur, auf der Ebene einer Basisstation (100, 114, 115, 116), einer Frequenzverschiebung ($\Delta F_1$, $\Delta F_i$, $\Delta F_N$) zwischen Signalen, die durch eine Vielzahl von Antennensystemen (101, 102, 103, 119, 120, 121, 124, 125, 126, 127, 200, 306_1, 306_i, 306_N) übertragen werden, die räumlich um eine Berechnungseinheit (104, 118, 122, 126, 304) der Basisstation herum verteilt sind und Signalen, die von einem Funkgerät (106, 107, 108, 128, 129, 130, 201, 310) empfangen werden, wobei das Verfahren Folgendes aufweist:

a) das Senden, durch das Funkgerät, eines ersten Signals (UPLINK), wobei das Signal von jedem der Antennensysteme empfangen wird;
b) die Umwandlung, durch die Antennensysteme, des ersten empfangen Signals in zweite Basisbandsignale, und deren Übertragung, durch die Antennensysteme, an die Berechnungseinheit;
c) die Messung, durch die Berechnungseinheit, von Ankunftswinkeln ($\theta_1$, $\theta_i$, $\theta_N$) der zweiten Signale und der Frequenzverschiebung der zweiten Basisbandsignale;
d) die Schätzung, durch die Berechnungseinheit, eines Verschiebungswinkels ($\theta_M$) des Funkgeräts, eines ersten Frequenzversatzes ($F_{DOP}$), der durch die Verschiebung des Funkgeräts verursacht wird, und eines zweiten Frequenzversatzes ($F_{CFO}$) zwischen einer Clock bzw. eines Takts des Funkgeräts und synchronisierten Clocks der Antennensysteme;

e) die Frequenzanpassung und das Vor-Kodieren unter Berücksichtigung der erhaltenen Schätzungen, durch die Berechnungseinheit und für jedes der Antennensysteme, von dritten Basisbandsignalen; und

f) die Übertragung, durch die Berechnungseinheit, der dritten Basisbandsignale an die Vielzahl von Antennensystemen und die Übertagung, durch die Vielzahl von Antennensystemen, der dritten Basisbandsignale an das Funkgerät.

2. Verfahren nach Anspruch 1, wobei die Schätzung des Verschiebungswinkels ($\theta_M$) des Funkgeräts (106, 107, 108, 128, 129, 130, 201, 310), des ersten Frequenzversatzes ($F_{DOP}$), und des zweiten Frequenzversatzes ($F_{CFO}$), durchgeführt wird durch Lösen eines Regressionsproblems, wie es durch die Folgende Gleichung beschrieben wird:

[Math 15]

$$\Delta F_i = F_{CFO} + F_{DOP}\cos(\theta_i - \theta_M), \qquad i \in \{1, \cdots, N\},$$

wobei N die Anzahl von Antennensystemen (101, 102, 103, 119, 120, 121, 124, 125, 126, 127, 200, 306_1, 306_i, 306_N) beschreibt, wobei i den Rang des Antennensystems beschreibt, wobei $\Delta F_i$ die Frequenzverschiebung beschreibt,
die von dem Antennensystem mit Rang i gemessen wurde, wobei $\theta_i$ den Ankunftswinkel beschreibt, der von dem Antennensystem mit Rang i gemessen wurde, wobei $\theta_M$ den Verschiebungswinkel des Funkgeräts beschreibt, und wobei $F_{CFO}$ und $F_{DOP}$ jeweils den ersten und zweiten Frequenzversatz beschreiben.

3. Verfahren nach Anspruch 2, wobei das Regressionsproblem mittels einer Linearisierung der Gleichung gelöst wird, die das Regressionsproblem beschreibt, wobei die Linearisierung geschrieben wird als:

[Math 16]

$$\Delta F_i = F_{CFO} + F_{DOP}\cos(\theta_M)\cos(\theta_i) + F_{DOP}\sin(\theta_M)\sin(\theta_i), \qquad i \in \{1, \cdots, N\}.$$

4. Verfahren nach einem der Ansprüche 1 bis 3, wobei der Verschiebungswinkel ($\theta_M$) des Funkgeräts unabhängig von dem Ort des Funkgeräts (106, 107, 108, 128, 129, 130, 201, 310) geschätzt wird.

5. Verfahren nach einem der Ansprüche 1 bis 4, wobei die Frequenzanpassung der dritten Signale, die an das Funkgerät (106, 107, 108, 128, 129, 130, 201, 310) übertragen werden, durchgeführt wird durch Anpassen der Ausrichtung und/oder der Leistung und/oder der Phase jedes Antennensystems (101, 102, 103, 119, 120, 121, 124, 125, 126, 127, 200, 306_1, 306_i, 306_N) basierend auf der Schätzung.

6. Verfahren nach Anspruch 5, wobei das Anpassen der Antennensysteme (101, 102, 103, 119, 120, 121, 124, 125, 126, 127, 200, 306_1, 306_i, 306_N) gesteuert wird durch die Berechnungseinheit (104, 118, 122, 126, 304).

7. Verfahren nach einem der Ansprüche 1 bis 6, wobei, für jedes der Antennensysteme (101, 102, 103, 119, 120, 121, 124, 125, 126, 127, 200, 306_1, 306_i, 306_N), die Frequenzanpassung der dritten übertragenen Signale eine Kompensierung des Kanalalterungseffekts basierend auf der Schätzung aufweist.

8. Verfahren nach einem der Ansprüche 1 bis 7, wobei Schritte a) bis f) periodisch wiederholt werden.

9. System, das eine Vielzahl von Antennensystemen (101, 102, 103, 119, 120, 121, 124, 125, 126, 127, 200, 306_1, 306_i, 306_N) und eine Basisstation (100, 114, 115, 116) aufweist, das eingerichtet ist zur Realisierung des Verfahrens nach einem der Ansprüche 1 bis 8, wobei die Antennensysteme räumlich um eine Berechnungseinheit (104, 118, 122, 126, 304) der Basisstation herum verteilt sind.

10. System nach Anspruch 9, wobei die Antennensysteme (101, 102, 103, 119, 120, 121, 124, 125, 126, 127, 200, 306_1, 306_i, 306_N) Funkfrequenzköpfe (308_1, 308_i, 308_N) aufweisen.

11. System nach Anspruch 9 oder 10, wobei die Berechnungseinheit (104, 118, 122, 126, 304) der Basisstation (100, 114, 115, 116) eingerichtet ist die Schätzung zu realisieren, und zwar des Verschiebungswinkel ($\theta_M$), des ersten Frequenzversatzes ($F_{DOP}$), und des zweiten Frequenzversatzes ($F_{CFO}$).

**12.** System nach einem der Ansprüche 9 bis 11, das eine Vielzahl von Basisstationen (100, 114, 115, 116) aufweist, die miteinander kommunizieren, wobei eine dieser Basisstationen das Schätzen und Übertragen von Anpassungsparametern an die anderen Basisstationen durchführt.

**13.** System nach Anspruch 12, wobei die anderen Basisstationen (100, 114, 115, 116) Funkfrequenzköpfe (308_1, 308_i, 308_N) sind.

**14.** System nach einem der Ansprüche 9 bis 13, wobei die Ausbreitungskanäle der dritten Signale, die von den Antennensystemen (101, 102, 103, 119, 120, 121, 124, 125, 126, 127, 200, 306_1, 306_i, 306_N) übertragen werden, Einzelpfad bzw. single-path sind.

**Claims**

**1.** Method of estimation and correction, at the level of a base station (100, 114, 115, 116), of a frequency drift ($\Delta F_1$, $\Delta F_i$, $\Delta F_N$) between signals transmitted by a plurality of antenna systems (101, 102, 103, 119, 120, 121, 124, 125, 126, 127, 200, 306_1, 306_i, 306_N) spatially distributed around a computing unit (104, 118, 122, 126, 304) of the base station and signals received by a radio device (106, 107, 108, 128, 129, 130, 201, 310), the method comprising:

  a) the sending, by the radio device, of a first signal (UPLINK), said signal being received by each of the antenna systems;
  b) the conversion, by the antenna systems, of said first received signal into second baseband signals, and their transmission, by the antenna systems, to the computing unit;
  c) the measurement, by the computing unit, of angles of arrival ($\theta_1$, $\theta_i$, $\theta_N$) of the second signals and of the frequency drift of the second baseband signals;
  d) the estimation, by the computing unit, of a displacement angle ($\theta_M$) of the radio device, of a first frequency offset ($F_{DOP}$) induced by the displacement of the radio device, and of a second frequency offset ($F_{CFO}$) between a clock of the radio device and synchronized clocks of the antenna systems;
  e) the frequency adjustment and the pre-coding taking into account the obtained estimations, by the computing unit and for each of the antenna systems, of third baseband signals; and
  f) the transmission, by the computing unit, of the third baseband signals to the plurality of antenna systems and the transmission, by said plurality of antenna systems, of said third baseband signals to the radio device.

**2.** Method according to claim 1, wherein the estimation of the displacement angle ($\theta_M$) of the radio device (106, 107, 108, 128, 129, 130, 201, 310), of the first frequency offset ($F_{DOP}$), and of the second frequency offset ($F_{CFO}$), is performed by resolution of a regression problem described by the following expression:

[Math 15]

$$\Delta F_i = F_{CFO} + F_{DOP} \cos(\theta_i - \theta_M), \qquad i \in \{1, \cdots, N\},$$

where N designates the number of antenna systems (101, 102, 103, 119, 120, 121, 124, 125, 126, 127, 200, 306_1, 306_i, 306_N) , i designates the rank of the antenna system, $\Delta F_i$ designates the frequency drift measured by the antenna system of rank i, $\theta_i$ designates the angle of arrival measured by the antenna system of rank i, $\theta_M$ designates the displacement angle of the radio device, $F_{CFO}$ and $F_{DOP}$ respectively designate the first and the second frequency offset.

**3.** Method according to claim 2, wherein the regression problem is solved by means of a linearization of the expression describing said regression problem, the linearization being written as:

[Math 16]

$$\Delta F_i = F_{CFO} + F_{DOP} \cos(\theta_M) \cos(\theta_i) + F_{DOP} \sin(\theta_M) \sin(\theta_i), \qquad i \in \{1, \cdots, N\}.$$

**4.** Method according to any of claims 1 to 3, wherein the displacement angle of the radio device ($\theta_M$) is estimated independently from the location of the radio device (106, 107, 108, 128, 129, 130, 201, 310).

5. Method according to any of claims 1 to 4, wherein the frequency adjustment of the third signals transmitted to the radio device (106, 107, 108, 128, 129, 130, 201, 310) is performed by adapting the directivity and/or the power and/or the phase of each antenna system (101, 102, 103, 119, 120, 121, 124, 125, 126, 127, 200, 306_1, 306_i, 306_N) based on said estimate.

6. Method according to claim 5, wherein the adaptation of the antenna systems (101, 102, 103, 119, 120, 121, 124, 125, 126, 127, 200, 306_1, 306_i, 306_N) is controlled by the computing unit (104, 118, 122, 126, 304).

7. Method according to any of claims 1 to 6, wherein, for each of the antenna systems (101, 102, 103, 119, 120, 121, 124, 125, 126, 127, 200, 306_1, 306_i, 306_N), the frequency adjustment of the third transmitted signals comprises a compensation of the channel aging effect based on the estimate.

8. Method according to any of claims 1 to 7, wherein steps a) to f) are periodically repeated.

9. System comprising a plurality of antenna systems (101, 102, 103, 119, 120, 121, 124, 125, 126, 127, 200, 306_1, 306_i, 306_N) and a base station (100, 114, 115, 116) configured for the implementation of the method according to any of claims 1 to 8, said antenna systems being spatially distributed around a computing unit (104, 118, 122, 126, 304) of the base station.

10. System according to claim 9, wherein the antenna systems (101, 102, 103, 119, 120, 121, 124, 125, 126, 127, 200, 306_1, 306_i, 306_N) contain radio frequency heads (308_1, 308_i, 308_N).

11. System according to claim 9 or 10, wherein the computing unit (104, 118, 122, 126, 304) of the base station (100, 114, 115, 116) is configured to implement the estimation of said displacement angle ($\theta_M$), of said first frequency offset ($F_{DOP}$), and of said second frequency offset ($F_{CFO}$).

12. System according to any of claims 9 to 11, comprising a plurality of base stations (100, 114, 115, 116) communicating with one another, one of these base stations performing said estimation and transmitting adaptation parameters to the other base stations.

13. System according to claim 12, wherein the other base stations (100, 114, 115, 116) are radio frequency heads (308_1, 308_i, 308_N).

14. System according to any of claims 9 to 13, wherein the propagation channels of the third signals transmitted by the antenna systems (101, 102, 103, 119, 120, 121, 124, 125, 126, 127, 200, 306_1, 306_i, 306_N) are single-path.

Fig 1

Fig 2

Fig 3

UPLINK

DOWNLINK

200

201

Fig 4

Fig 5

Fig 6

Fig 7